# EUROPÄISCHE PATENTSCHRIFT

(11) **EP 3 510 617 B1**
(45) Veröffentlichungstag und Bekanntmachung des Hinweises auf die Patenterteilung: **27.10.2021**
(21) Anmeldenummer: 17764587.6
(22) Anmeldetag: 08.09.2017
(51) Int. Cl.: H01H 9/54, H02H 3/08

(54) **SCHUTZSCHALTGERÄT**
CIRCUIT BREAKER
DISJONCTEUR

(30) Priorität: 09.09.2016 DE 102016117003
(43) Veröffentlichungstag der Anmeldung: 17.07.2019
(73) Patentinhaber: Eaton Intelligent Power Limited, Dublin 4 (IE)
(72) Erfinder: ASKAN, Kenan, 1090 Wien (AT); BARTONEK, Michael, 1080 Wien (AT); KATZENSTEINER, Matthias, 1210 Wien (AT)
(74) Vertreter: Eaton IP Group EMEA
(86) Internationale Anmeldenummer: PCT/EP2017/072667
(87) Internationale Veröffentlichungsnummer: WO 2018/046707

(56) Entgegenhaltungen:
- WO-A1-2015/028634
- DE-A1- 4 018 713
- JP-U- H0 578 146

## Beschreibung

Die Erfindung betrifft ein Niederspannungs-Schutzschaltgerät gemäß dem Oberbegriff des Patentanspruches 1.

Es ist ein entsprechendes Schutzschaltgerät aus der WO 2015/028634 A1 der Anmelderin bekannt. Beim Ausschalten des Schutzschaltgeräts, etwa bei Auftreten eines Kurzschlusses, wird dabei erst der Bypassschalter geöffnet, wobei ein Lichtbogen entsteht, und als Folge der Strom auf die Halbleiterschaltungsanordnung kommutiert. Nachfolgend wird der Kurzschlussstrom durch die IGBTs abgeschaltet. Dabei ist es wichtig, dass vor dem Abschalten mittels der IGBTs der Bypassschalter ausreichend weit geöffnet ist, um zu vermeiden, dass an den Kontakten des Bypassschalters erneut ein Lichtbogen zündet bzw. bestehen bleibt.

Bei dem bekannten Schutzschaltgerät wird die Kollektor-Emitter-Spannung an wenigstens einem der IGBTs gemessen, um derart darauf zu schließen, ob die Kontakte des Bypassschalers angefangen haben sich zu öffnen. Sobald dies anhand eines Anstieges der Kollektor-Emitter-Spannung detektiert ist, wird ein Counter gestartet. Nach Ablauf einer vorbestimmen Zeitdauer wird davon ausgegangen, dass die Kontakte des Bypassschalters geöffnet haben, einen ausreichenden Kontaktabstand aufweisen, und der Kurzschluss mittels der IGBTs sicher abgeschaltet werden kann.

Es hat sich jedoch gezeigt, dass zwischen der Detektion eines Kurzschlusses und dem Beginn der Kontaktöffnung des Bypassschalters einige hundert Mikrosekunden vergehen. Diese Zeit reicht jedoch im Zusammenspiel mit dem stark ansteigenden Kurzschlussstrom aus, um in dem IGBT-Parallelzweig zu einem ausreichend hohen Stromfluss zu führen, dass die Steuerelektronik ein Öffnen der Kontakte des Bypassschalters erkennt, den Counter startet und dementsprechend zu früh den Kurzschluss abschaltet. Dies führt zu einem schädlichen Lichtbogen an dem Bypassschalter, wodurch dieser erheblich belastet wird. Zudem führt, selbst bei ordnungsgemäßer bzw. vorgesehener Funktion der betreffenden Anordnung, das lange Warten vor dem Abschalten des Kurzschlusses zu einer hohen Belastung des IGBT-Parallelzweigs sowie des weiters vorhandenen Varistors, da dieser dazu in der Lage sein muss, eine entsprechend hohe Spannung abzuführen.

Die JPH 05 78146 U beschreibt ein hybrides Schaltgerät mit einer ersten und einer zweiten Strommessanordnung, welche jedoch beide einen Stromwandler (current transformer) als Sensor verwenden.

Aufgabe der Erfindung ist es daher ein Schutzschaltgerät der eingangs genannten Art anzugeben, mit welchem die genannten Nachteile vermieden werden können, welches eine geringe Baugröße aufweist, und welches über eine lange Zeit eine hohe Zuverlässigkeit aufweist.

Erfindungsgemäß wird dies durch die Merkmale des Patentanspruches 1 erreicht. Dadurch kann sicher erkannt werden, dass sich die Kontakte des Bypassschalters tatsächlich öffnen. Nachdem derart detektiert wurde, dass sich die Kontakte des Bypassschalters tatsächlich öffnen, kann ein Counter gestartet werden, nach dessen Ablauf davon ausgegangen wird, dass die betreffenden Kontakte nunmehr vollständig bzw. ausreichend geöffnet sind. Da nunmehr sichergestellt ist, dass tatsächlich das Öffnen der betreffenden Kontakte erkannt wird, kann der nachfolgend gestartete Counter auf eine kürzere Zeit eingestellt werden, als dies bislang der Fall ist. Durch die gegenständlichen Maßnahmen kann sicher erkannt werden, dass sich die Kontakte des Bypassschalters tatsächlich zu öffnen begonnen haben. Dadurch kann ein erneutes Zünden eines Lichtbogens an dieser Stelle verhindert werden. Dadurch kann der Kurzschluss in kürzerer Zeit abgeschaltet werden, wodurch wiederum die Belastung der IGBTs als auch des Varistors gering gehalten werden kann. Dadurch können jeweils Komponenten verwendet werden, welche eine geringere Belastbarkeit aufweisen, sowie auch eine geringere Baugröße. Aufgrund der geringeren Baugröße wird auch die Schleifeninduktanz gesenkt, wodurch die Zeit verringert werden kann, welche der Kurzschlussstrom benötigt um auf den IGBT-Parallelzweig zu kommutieren.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung betrifft ein Niederspannungs-Schutzschaltgerät mit mindestens einer Außenleiterstrecke von einem Außenleiterversorgungsanschluss des Niederspannungs-Schutzschaltgeräts zu einem Außenleiterlastanschluss des Niederspannungs-Schutzschaltgeräts, und einer Neutralleiterstrecke von einem Neutralleiteranschluss des Niederspannungs-Schutzschaltgeräts zu einem Neutralleiterlastanschluss des Niederspannungs-Schutzschaltgeräts, wobei in der Außenleiterstrecke ein mechanischer Bypassschalter und ein erster mechanischer Trennschalter seriell angeordnet sind, wobei in der Neutralleiterstrecke ein zweiter mechanischer Trennschalter angeordnet ist, wobei eine Halbleiterschaltungsanordnung des Niederspannungs-Schutzschaltgeräts parallel zum Bypassschalter geschaltet ist, wobei in der Außenleiterstrecke eine erste Strommessanordnung, umfassend einen ersten Shunt, angeordnet ist, welche mit einer elektronischen Steuereinheit des Schutzschaltgeräts verbunden ist, wobei die elektronische Steuereinheit dazu ausgebildet ist, den Bypassschalter, den ersten mechanischen Trennschalter, den zweiten mechanischen Trennschalter und die Halbleiterschaltungsanordnung bei Detektion eines vorgebbaren Überstromes, insbesondere eines Kurzschlussstromes, durch die Strommessanordnung anzusteuern, wobei das Niederspannungs-Schutzschaltgerät wenigstens eine zweite Strommessanordnung zum Messen eines ersten Stromes über den Bypassschalter oder eines zweiten Stromes über die Halbleiterschaltungsanordnung aufweist, wobei die zweite Strommessanordnung einen zweiten Shunt umfasst, und wobei der zweite Shunt zusammen mit dem ersten Shunt auf einem Substrat angeordnet sind.

Dadurch kann sicher erkannt werden, dass sich die Kontakte des Bypassschalters tatsächlich öffnen. Nachdem derart detektiert wurde, dass sich die Kontakte des Bypassschalters tatsächlich öffnen, kann ein Counter gestartet werden, nach dessen Ablauf davon ausgegangen wird, dass die betreffenden Kontakte nunmehr vollständig bzw. ausreichend geöffnet sind. Da nunmehr sichergestellt ist, dass tatsächlich das Öffnen der betreffenden Kontakte erkannt wird, kann der nachfolgend gestartete Counter auf eine kürzere Zeit eingestellt werden, als dies bislang der Fall ist. Durch die gegenständlichen Maßnahmen kann sicher erkannt werden, dass sich die Kontakte des Bypassschalters tatsächlich zu öffnen begonnen haben. Dadurch kann ein erneutes Zünden eines Lichtbogens an dieser Stelle verhindert werden. Dadurch kann der Kurzschluss in kürzerer Zeit abgeschaltet werden, wodurch wiederum die Belastung der IGBTs als auch des Varistors gering gehalten werden kann. Dadurch können jeweils Komponenten verwendet werden, welche eine geringere Belastbarkeit aufweisen, sowie auch eine geringere Baugröße. Aufgrund der geringeren Baugröße wird auch die Schleifeninduktanz gesenkt, wodurch die Zeit verringert werden kann, welche der Kurzschlussstrom benötigt um auf den IGBT-Parallelzweig zu kommutieren.

Bei dem gegenständlichen Schutzschaltgerät wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bzw. 1500V Gleichspannung bezeichnet.

Ein Schutzschaltgerät gemäß dem Stand der Technik, wie dieses etwa in der WO 2015/028634 A1 beschrieben ist, weist, wie auch das gegenständliche Schutzschaltgerät eine Außenleiterstrecke sowie eine Neutralleiterstrecke auf. Die Außenleiterstrecke verläuft durch das Schutzschaltgerät von einem Außenleiterversorgungsanschluss zu einem Außenleiterlastanschluss. Die Neutralleiterstrecke verläuft durch das Schutzschaltgerät von einem Neutralleiteranschluss zu einem Neutralleiterlastanschluss. Die betreffenden Anschlüsse sind jeweils bevorzugt als Schraubanschlussklemmen bzw. Steckanschlussklemmen ausgebildet, und in dem Schutzschaltgerät von außen zugänglich angeordnet.

Das Schutzschaltgerät weist bevorzugt ein Isolierstoffgehäuse auf.

In der Außenleiterstrecke ist ein herkömmlicher mechanischer Bypassschalter mit einfacher Kontaktunterbrechung angeordnet. Bevorzugt ist in der Außenleiterstrecke weiters ein erster mechanischer Trennschalter, insbesondere seriell zum Bypassschalter, angeordnet. In der Neutralleiterstrecke ist bevorzugt ein zweiter mechanischer Trennschalter angeordnet. Parallel zum Bypassschalter 8 ist eine Halbleiterschaltungsanordnung geschaltet.

Weiters ist parallel zum Bypassschalter ein Überspannungsableiter geschaltet.

Das Schutzschaltgerät weist weiters eine Strommessanordnung auf, welche in der Außenleiterstrecke angeordnet ist, und welche umfassend einem ersten Shunt bzw. Shunt-Widerstand ausgebildet ist. Die erste Strommessanordnung ist bevorzugt seriell sowohl zum Bypassschalter als auch zur Halbleiterschaltungsanordnung angeordnet. Besonders bevorzugt ist vorgesehen, dass der erste Shunt durch einen ersten Leiterbahnabschnitt einer Leiterbahn des Niederspannungs-Schutzschaltgeräts gebildet ist.

Die Strommessanordnung ist mit einer elektronischen Steuereinheit des Schutzschaltgeräts verbunden, welche bevorzugt umfassend einen Mikrocontroller bzw. Mikroprozessor ausgebildet ist. Die elektronische Steuereinheit ist dazu ausgebildet, den Bypassschalter und die Halbleiterschaltungsanordnung, sowie vorzugsweise den ersten mechanischen Trennschalter und den zweiten mechanischen Trennschalter, anzusteuern, daher diese vorgebbar zu betätigen bzw. zu schalten. Hiezu ist die elektronische Steuereinheit mit der Halbleiterschaltungsanordnung, sowie weiters mit, insbesondere elektromagnetischen, Betätigungselementen der mechanischen Schalter, daher des Bypassschalters, des ersten mechanischen Trennschalters und des zweiten mechanischen Trennschalters bevorzugt schaltungstechnisch verbunden. Beim Ausschalten wird dabei nach dem Abschalten der IGBTs die Spannung wegen der im Netz gespeicherten Energie steigen. Die steigende Spannung wird vom Überspannungsableiter geleitet, welcher den Strom begrenzt. Wenn der Strom klein genug ist, werden der erste und zweite mechanische Trennschalter geöffnet.

Die Halbleiterschaltungsanordnung weist bevorzugt eine Gleichrichterschaltung, welche bevorzugt als Vollbrücke ausgebildet ist, sowie, bei der gegenständlichen Ausführungsform zwei Leistungshalbleiter, welche gegenständlich als IGBT ausgebildet sind, als eigentliche Schalt- bzw. Regelelemente auf. Dabei kann auch ein größerer Leistungshalbleiter vorgesehen sein.

Beim einem Schaltgerät gemäß dem Stand der Technik ist vorgesehen, dass ein Abschaltvorgang von dem Bypassschalter und der Halbleiterschaltungsanordnung durchgeführt wird, und die ersten und zweiten Trennschalter lediglich dazu dienen, nach erfolgter Abschaltung eine galvanische Trennung des Lastkreises sicherzustellen.

Bei einem gegenständlichen Niederspannungs-Schutzschaltgerät ist vorgesehen, dass das Niederspannungs-Schutzschaltgerät wenigstens eine zweite Strommessanordnung zum Messen eines ersten Stromes über den Bypassschalter oder eines zweiten Stromes über die Halbleiterschaltungsanordnung aufweist. Durch Messen eines der Ströme in einem Zweig einer gegenständlichen Parallelschaltung ist, sofern der Summenstrom durch die Parallelschaltung bekannt ist, unter Anwendung des ersten Kirchhoffschen Gesetzes, auch der Strom in dem anderen Zweig der Parallelschaltung bekannt.

Bevorzugt ist vorgesehen, dass die zweite Strommessanordnung in der Außenleiterstrecke schaltungstechnisch seriell zum Bypassschalter und parallel zur Halbleiterschaltungsanordnung angeordnet ist. Dadurch wird direkt der Strom an dem Bypassschalter gemessen.

Zusätzlich bzw. Alternativ hiezu kann vorgesehen sein, dass die zweite Strommessanordnung schaltungstechnisch seriell zur Halbleiterschaltungsanordnung und parallel zum Bypassschalter angeordnet ist.

Es ist vorgesehen, dass die zweite Strommessanordnung einen zweiten Shunt umfasst. Dabei hat es sich als besonders vorteilhaft erwiesen, wenn der zweite Shunt durch einen zweiten Leiterbahnabschnitt gebildet ist. Dadurch kann der Widerstand gering gehalten werden, und folglich auch die Verlustleistung. Da die Messergebnisse des zweiten Shunt erst bei sehr hohen Strömen relevant werden, führt auch der geringe Spannungsabfall an einem Leitbahnstück wie dem zweiten Leiterbahnabschnitt zu ausreichend genauen Messungen.

Die Strommessung durch die zweite Strommessanordnung erfolgt im Zusammenwirken des zweiten Shunt mit der elektronischen Steuereinheit. Erfindungsgemäß hat es sich als besonders vorteilhaft erwiesen, dass der zweite Shunt zusammen mit dem ersten Shunt, sowie vorzugsweise der Halbleiterschaltungsanordnung, auf einem Substrat, insbesondere einem DCB-Substrat, angeordnet sind. DCB steht dabei für Direct Copper Bonded. An einem entsprechenden Substrat kann auch der Bypassschalter angeordnet sein. Durch die Anordnung auf dem Substrat kann die Schleifeninduktanz weiter gesenkt werden, da die Wege bzw. Schleifenlänge kurz gehalten wird. Weiters kann dadurch die Abschaltzeit des Niederspannungs-Schutzschaltgeräts reduziert werden. Zudem wird dadurch die Messgenauigkeit vergrößert, da die beiden Shunts thermisch gekoppelt sind.

Bei der Anordnung des ersten und zweiten Shunts auf dem Substrat sind diese insbesondere als erster bzw. zweiter Leiterbahnabschnitt ausgebildet.

Gemäß der zweiten bevorzugten Ausführungsform der gegenständlichen Erfindung, welche bis auf die Ausbildung der Halbleiterschaltungsanordnung identisch zur ersten bevorzugten Ausführungsform ist, ist die Halbleiterschaltungsanordnung mittels Back to Back IGBTs ausgebildet. Die Ausbildung der Halbleiterschaltungsanordnung mittels Back to Back IGBTs weist zahlreiche Vorteile auf. Durch die zweite Strommessanordnung kann der Bypassstatus eruiert werden, während gleichzeitig die Verlustleistung sowie die Baueilanzahl gesenkt werden kann, da kein Snubber mehr erforderlich ist. Weiters kann dadurch die Kommutierungsschleife verkürzt werden.

## Patentansprüche

1. Niederspannungs-Schutzschaltgerät mit mindestens einer Außenleiterstrecke von einem Außenleiterversorgungsanschluss des Niederspannungs-Schutzschaltgeräts zu einem Außenleiterlastanschluss des Niederspannungs-Schutzschaltgeräts, und einer Neutralleiterstrecke von einem Neutralleiteranschluss des Niederspannungs-Schutzschaltgeräts zu einem Neutralleiterlastanschluss des Niederspannungs-Schutzschaltgeräts, wobei in der Außenleiterstrecke ein mechanischer Bypassschalter angeordnet ist, wobei eine Halbleiterschaltungsanordnung des Niederspannungs-Schutzschaltgeräts parallel zum Bypassschalter geschaltet ist, wobei in der Außenleiterstrecke eine erste Strommessanordnung umfassend einen ersten Shunt angeordnet ist, welche mit einer elektronischen Steuereinheit des Schutzschaltgeräts verbunden ist, wobei die elektronische Steuereinheit dazu ausgebildet ist, den Bypassschalter und die Halbleiterschaltungsanordnung bei Detektion eines vorgebbaren Überstromes, insbesondere eines Kurzschlussstromes, durch die Strommessanordnung anzusteuern, **dadurch gekennzeichnet, dass** das Niederspannungs-Schutzschaltgerät wenigstens eine zweite Strommessanordnung zum Messen eines ersten Stromes über den Bypassschalter oder eines zweiten Stromes über die Halbleiterschaltungsanordnung aufweist, dass die zweite Strommessanordnung einen zweiten Shunt umfasst, und dass der zweite Shunt zusammen mit dem ersten Shunt auf einem Substrat angeordnet sind.

2. Niederspannungs-Schutzschaltgerät nach Anspruch 1, **dadurch gekennzeichnet, dass** die zweite Strommessanordnung in der Außenleiterstrecke schaltungstechnisch seriell zum Bypassschalter und parallel zur Halbleiterschaltungsanordnung angeordnet ist.

3. Niederspannungs-Schutzschaltgerät nach Anspruch 1, **dadurch gekennzeichnet, dass** die zweite Strommessanordnung schaltungstechnisch seriell zur Halbleiterschaltungsanordnung und parallel zum Bypassschalter angeordnet ist.

4. Niederspannungs-Schutzschaltgerät nach einem der Ansprüche 1 bis 3, **dadurch gekennzeichnet, dass** der erste Shunt durch einen ersten Leiterbahnabschnitt gebildet ist.

5. Niederspannungs-Schutzschaltgerät nach einem der Ansprüche 1 bis 4, **dadurch gekennzeichnet, dass** der zweite Shunt durch einen zweiten Leiterbahnabschnitt gebildet ist.

6. Niederspannungs-Schutzschaltgerät nach einem der Ansprüche 1 bis 5, **dadurch gekennzeichnet, dass** auf dem Substrat weiters die Halbleiterschaltungsanordnung angeordnet ist.

7. Niederspannungs-Schutzschaltgerät nach einem der Ansprüche 1 bis 6, **dadurch gekennzeichnet, dass** das Substrat ein DCB-Substrat ist.

8. Niederspannungs-Schutzschaltgerät nach einem der Ansprüche 1 bis 7, **dadurch gekennzeichnet, dass** die erste Strommessanordnung seriell zum Bypassschalter und zur Halbleiterschaltungsanordnung angeordnet ist.

9. Niederspannungs-Schutzschaltgerät nach einem der Ansprüche 1 bis 8, **dadurch gekennzeichnet, dass** in der Außenleiterstrecke ein erster mechanischer Trennschalter, insbesondere seriell zum Bypassschalter, angeordnet ist, und dass die elektronische Steuereinheit vorzugsweise dazu ausgebildet ist, den ersten mechanischen Trennschalter zu betätigen.

10. Niederspannungs-Schutzschaltgerät nach einem der Ansprüche 1 bis 9, **dadurch gekennzeichnet, dass** in der Neutralleiterstrecke ein zweiter mechanischer Trennschalter angeordnet ist, und dass die elektronische Steuereinheit vorzugsweise dazu ausgebildet ist, den zweiten mechanischen Trennschalter zu betätigen.

## Claims

1. Low-voltage circuit protection device having at least one outer conductor path from an outer conductor supply connection of the low-voltage circuit protection device to an outer conductor load connection of the low-voltage circuit protection device, and a neutral conductor path from a neutral conductor connection of the low-voltage circuit protection device to a neutral conductor load connection of the low-voltage circuit protection device, a mechanical bypass being arranged in the outer conductor path, a semiconductor circuit arrangement of the low-voltage circuit protection device being connected in parallel to the bypass switch, a first current measuring arrangement comprising a first shunt being arranged in the external conductor path, which measuring arrangement is connected to an electronic control unit of the circuit protection device, the electronic control unit being designed to control the bypass switch and the semiconductor circuit arrangement upon detection of a predeterminable overcurrent, in particular a short-circuit current, by the current measuring arrangement, **characterized in that** the low-voltage circuit protection device has at least one second current measuring arrangement for measuring a first current via the bypass switch or a second current via the semiconductor circuit arrangement, **in that** the second current measuring arrangement comprises a second shunt, and **in that** the second shunt and the first shunt are arranged on a substrate.

2. Low-voltage circuit protection device according to claim 1, **characterized in that** the second current measuring arrangement is arranged in the outer conductor path in terms of circuitry in series with the bypass switch and in parallel with the semiconductor circuit arrangement.

3. Low-voltage circuit protection device according to claim 1, **characterized in that** the second current measuring arrangement is arranged in terms of circuitry in series with the semiconductor circuit arrangement and in parallel with the bypass switch.

4. Low-voltage circuit protection device according to any of claims 1 to 3, **characterized in that** the first shunt is formed by a first conductor track portion.

5. Low-voltage circuit protection device according to any of claims 1 to 4, **characterized in that** the second shunt is formed by a second conductor track portion.

6. Low-voltage circuit protection device according to any of claims 1 to 5, **characterized in that** the semiconductor circuit arrangement is also arranged on the substrate.

7. Low-voltage circuit protection device according to any of claims 1 to 6, **characterized in that** the substrate is a DCB substrate.

8. Low-voltage circuit protection device according to any of claims 1 to 7, **characterized in that** the first current measuring arrangement is arranged in series with the bypass switch and with the semiconductor circuit arrangement.

9. Low-voltage circuit protection device according to any of claims 1 to 8, **characterized in that** a first mechanical isolating switch, in particular in series with the bypass switch, is arranged in the outer conductor path, and **in that** the electronic control unit is preferably designed to operate the first mechanical isolating switch.

10. Low-voltage circuit protection device according to any of claims 1 to 9, **characterized in that** a second mechanical isolating switch is arranged in the neutral conductor path, and **in that** the electronic control unit is preferably designed to operate the second mechanical isolating switch.

## Revendications

1. Disjoncteur basse tension comportant au moins un trajet de conducteur externe d'une borne d'alimentation de conducteur externe du disjoncteur basse tension à une borne de charge de conducteur externe du disjoncteur basse tension, et un trajet de conducteur neutre d'une borne de conducteur neutre du disjoncteur basse tension à une borne de charge de conducteur neutre du disjoncteur basse tension, un commutateur de dérivation mécanique étant disposé dans le trajet de conducteur externe, un dispositif de circuit semi-conducteur du disjoncteur basse tension étant commuté parallèlement au commutateur de dérivation, un premier dispositif de mesure de courant comprenant un premier shunt étant disposé dans le trajet de conducteur externe et étant connecté à une unité de commande électronique du disjoncteur, l'unité de commande électronique étant conçue pour commander le commutateur de dérivation et le dispositif de circuit semi-conducteur lors de la détection d'une surintensité de courant prédéterminable, en particulier d'un courant de court-circuit, à l'aide du dispositif de mesure de courant, **caractérisé en ce que** le disjoncteur basse tension présente au moins un second dispositif de mesure de courant pour mesurer un premier courant par l'intermédiaire du commutateur de dérivation ou un second courant par l'intermédiaire du dispositif de circuit semi-conducteur, que le second dispositif de mesure de courant comprend un second shunt, et que le second shunt est disposé avec le premier shunt sur un substrat.

2. Disjoncteur basse tension selon la revendication 1, **caractérisé en ce que** le second dispositif de mesure de courant est disposé dans le trajet de conducteur externe en circuit en série avec le commutateur de dérivation et en parallèle avec le dispositif de circuit semi-conducteur.

3. Disjoncteur basse tension selon la revendication 1, **caractérisé en ce que** le second dispositif de mesure de courant est disposé en circuit en série avec le dispositif de circuit semi-conducteur et en parallèle avec le commutateur de dérivation.

4. Disjoncteur basse tension selon l'une des revendications 1 à 3, **caractérisé en ce que** le premier shunt est formé par une première partie de piste conductrice.

5. Disjoncteur basse tension selon l'une des revendications 1 à 4, **caractérisé en ce que** le second shunt est formé par une seconde partie de piste conductrice.

6. Disjoncteur basse tension selon l'une des revendications 1 à 5, **caractérisé en ce que** le dispositif de circuit semi-conducteur est disposé en outre sur le substrat.

7. Disjoncteur basse tension selon l'une des revendications 1 à 6, **caractérisé en ce que** le substrat est un substrat DBC.

8. Disjoncteur basse tension selon l'une des revendications 1 à 7, **caractérisé en ce que** le premier dispositif de mesure de courant est disposé en série avec le commutateur de dérivation et le dispositif de circuit semi-conducteur.

9. Disjoncteur basse tension selon l'une des revendications 1 à 8, **caractérisé en ce qu'**un premier sectionneur mécanique est disposé dans le trajet de conducteur externe, en particulier en série avec le commutateur de dérivation, et que l'unité de commande électronique est de préférence conçue pour actionner le premier sectionneur mécanique.

10. Disjoncteur basse tension selon l'une des revendications 1 à 9, **caractérisé en ce qu'**un second sectionneur mécanique est disposé dans le trajet de conducteur neutre, et que l'unité de commande électronique est de préférence conçue pour actionner le second sectionneur mécanique.
